**Europäisches Patentamt**

**European Patent Office**

**Office européen des brevets**

(11) Publication number: **0 007 150**
A1

# EUROPEAN PATENT APPLICATION

(21) Application number: **79300418.5**

(22) Date of filing: 16.03.79

(51) Int. Cl.³: **A 01 G 25/09**
**F 16 L 27/08**

(30) Priority: 17.03.78 US 887792
10.07.78 US 923291
06.03.79 US 18013

(43) Date of publication of application:
23.01.80 Bulletin 80/2

(84) Designated Contracting States:
BE CH DE FR GB IT NL SE

(71) Applicant: ALLEN T. NOBLE.
Post Office Box 1201
Boise Idaho 82701(US)

(72) Inventor: ALLEN T. NOBLE.
Post Office Box 1201
Boise Idaho 82701(US)

(74) Representative: Jones, Colin et al,
W.P. THOMPSON & CO. Coopers Building Church Street
Liverpool L1 3AB(GB)

(54) Land irrigation apparatus and method.

(57) A land irrigation apparatus in which a continuously or near continuously travelling sprinkler line (25) is continuously supplied with water through a spaced risers (34) from a stationary water supply conduit (33) extending in the direction of the movement of the sprinkler line. A conveyance (36) moves along the water supply conduit, the conveyance carrying a rotating water manifold (45) with a plurality of water carrying arms (41, 42, 43) extending radially from the manifold in angularly spaced relation to each other for successive connection to water outlet valves (35) on the risers as the conveyance moves along the water supply conduit. The water outlet from the water manifold is connected to the water inlet (51) of the sprinkler line through a water conduit (47, 104) having a swivel joint (49) whereby the water manifold and water carrying arms can rotate relative to the inlet of the sprinkler line. The water inlet end of each water carrying arm has a coupling device (52, 53, 54) for coupling with the water outlet valve of a riser and for opening and closing the riser water outlet valve. Co-ordinating means (80) act to close the riser water outlet valve and uncouple the arm coupling device from one riser when another arm coupling device has coupled with another riser and opened the water outlet valve of that riser.

./...

Croydon Printing Company Ltd.

— F I G.1 —

TITLE MODIFIED
see front page

— 1 —

## DESCRIPTION.

### "LAND IRRIGATION SYSTEM AND METHOD".

This invention is for use in connection with a land irrigating system in which a moving water sprinkler means having water inlet means at one point extends laterally to and moves along the length dimension of a stationary water supply means having a plurality of water outlet valve means at equally spaced points along the length thereof and involves an apparatus for successively connecting water outlet valve means of the stationary water supply means with water inlet means of the sprinkler means comprising conveyance means for moving along the length dimension of the stationary water supply means at the same overall rate of movement as the moving sprinkler means.

This invention is also for use in connection with a method of land irrigation wherein a moving sprinkler means having a water inlet means at one point moves along the length of a stationary water supply means having a plurality of water outlet valve means at spaced intervals along the length thereof, the method involving successively connecting water outlet valve means of the stationary water supply means with water inlet means of the sprinkler means to obtain substantially continuous water supply to the sprinkler means.

When irrigating extensive areas of land, long sprinkler lines have been used for some time. Water has been supplied to these lines from buried pipes called main lines with spaced risers projecting above the surface of the ground for connection to the sprinkler lines. Each time a sprinkler line had to be moved, manual labour was required for this purpose. This was a laborious and time consuming operation. As time went on, the sprinkler lines, which can reach a length of a quarter of a mile and more were fitted with wheels to make them easier to move. Eventually, power was supplied in one way or another to the wheeled lines to keep them moving slowly along the desired path parallel to the direction of the main line with flexible hoses extending between the water inlet end of the sprinkler lines and the riser to which the sprinkler line was connected. Since the main line can be eight or more inches in diameter with the water pressure in the main line high, the required size and strength of the flexible hoses became extremely burdensome in manual operation. Proposals were therefore made to facilitate connection of the sprinkling lines to successive risers with the least manual effort but to applicant's knowledge no successful machine has been developed prior to his. Three examples of such proposals are illustrated in Engel United States Patent 2,740,228, Stafford United States Reissue Patent 26,285 and Smith et al. United States Patents 3,381,893 and 3,446,434. Such proposals provided for intermittent connection of the sprinkler line to the main line utilizing power assisted mechanical devices as the hoses or telescoping pipes were moved from riser to riser, with the sprinkler line continuing to move along at the desired rate.

In order to provide for a continual source of water to the sprinkler line Rogers United States Patent 3,463,175 and Standal United States Patent 4,036,436·

proposed systems in which one riser is always connected to the sprinkler line, this being accomplished by having pipe or hose connections to the sprinkler line connect with devices which span three risers. By this arrangement, the forward part of the device is disconnected from one riser and goes on to a second riser ahead of the first riser and on connection of the device with the second riser, the hindmost part of the device, which has been connected to a third riser which is behind the first riser in the main line, moves up to connect with the first riser. As far as known to the applicant, these proposals were never put into use. In addition to requiring closely spaced risers, the mechanical problems associated with these systems appear to have ruled out their use.

Von Linsowe United States Patent 3,729,016 discloses another form of system for continuously feeding the water to a sprinkler line, but this system is extremely complicated and requires twin main lines since the twin coupling devices for connecting the sprinkler line to the main line cannot pass each other. This proposal appears to have the same history in practice as the Rogers and Standal systems.

In the system of the present invention, the faults and disadvantages of the prior systems have been eliminated by the provision of a plurality of pipes or water carrying arms arranged for successive coupling with novel valves in succeeding risers on a main line by virtue of these arms having their water outlets connected to a rotatable water manifold carried along the length of the water main by a conveyance, the water outlet of the rotatable water manifold, being connected to the water inlet end of the sprinkler line through a swivel joint of flexible conduit. The conveyance carries the apparatus along and since a single water carrying arm is connected to a single riser at any one time, movement of the conveyance causes or assists the pipes and water manifold to rotate and thereby bring the arms successively into coupling relationship with successive risers along the main line. Thus, continuous flow is achieved between the water main line and the sprinkler line without the mechanical and functional difficulties of prior systems.

A brief description of the drawings follows:-

Figure 1 is a perspective view of the system of the present invention connected to a sprinkler line with the subterranean water main line and conveyance guide line being partially exposed for clarity;

Figure 2 is a plan view of an embodiment which is the same as that illustrated in Figure 1 but with some components added and some movable components in different positions;

Figure 3 is a view in side elevation of the embodiment illustrated in Figure 2 but with some movable components in different positions,

Figure 4 is a view in vertical section taken on the line 4—4 of Figure 3;

Figure 5 is an enlarged view in vertical section of a component of the embodiment illustrated in Figures 1, 2, 3 and 4;

Figure 6 is a view in vertical section taken on the line 6—6 of Figure 3;

Figure 7 is a view in vertical section taken on the line 7—7 of Figure 3;

Figure 8 is a view similar to Figure 4 showing an additional component;

Figure 9 is an enlarged fragmentary view in side elevation of a component of the embodiment illustrated in Figures 1, 2 and 3;

Figure 10 is an enlarged view in side elevation of one of the three identical structures at the outer ends of the three arms illustrated in Figures 1, 3 and 4;

Figure 11 is a plan view of the structure illustrated in Figure 10 and showing the water main line in phantom;

Figures 12a, 12b, 12c, and 12d are views in vertical section of the structure illustrated in Figures 10 and 11 with the operating parts shown in different functional positions, and

Figure 13 is a view in plan, similar to Figure 2 of a modification of the present invention.

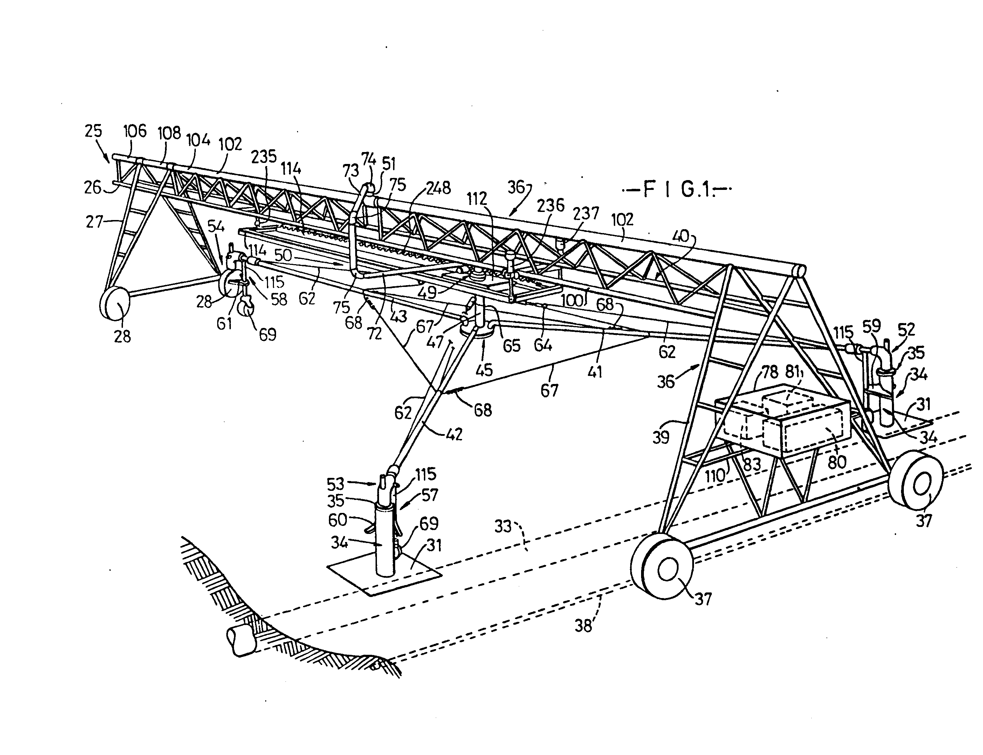

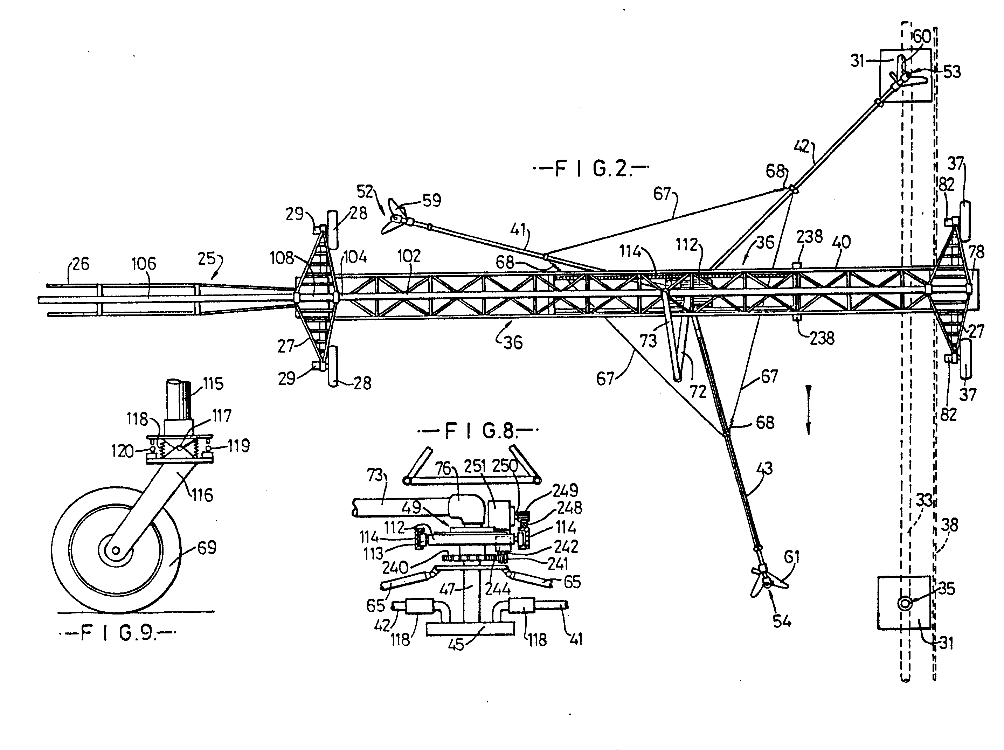

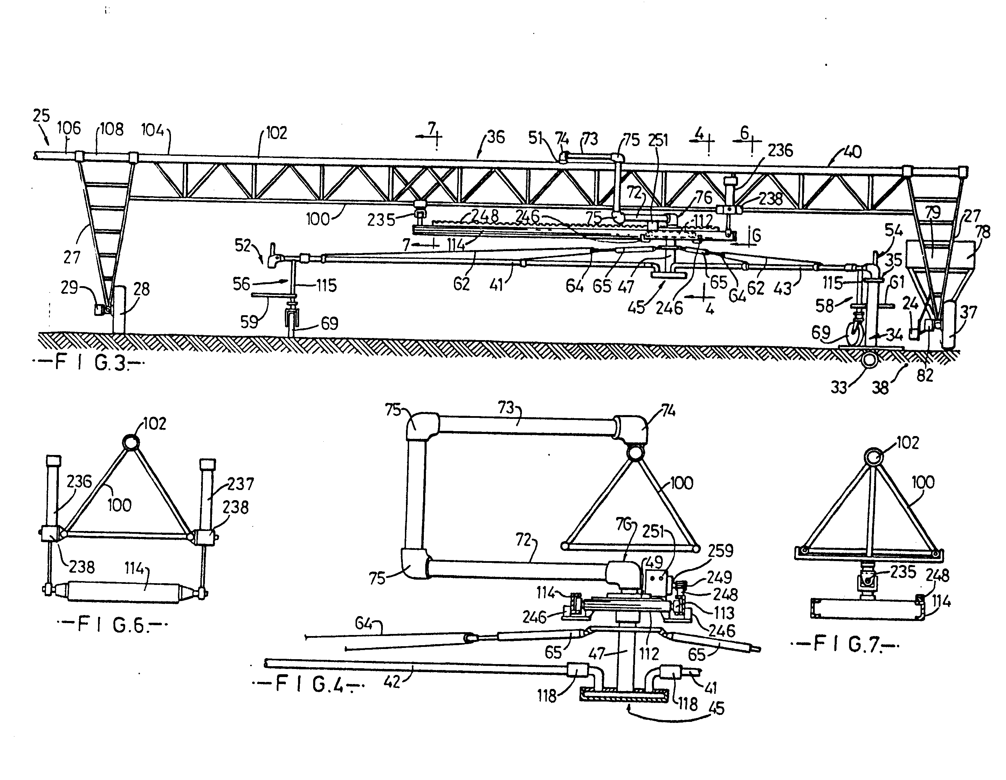

Referring to Figures 1 to 5 inclusive, reference numeral 25 indicates generally one end portion of a water sprinkler line supported on a truss 26 and tower 27, the base of the tower being mounted on wheels 28 which can be driven in synchronism by electric motors 29. Reference numeral 33 indicates an underground main line for supplying water to sprinkler line 25 through risers indicated generally at 34. Sprinkler line wheels 28 are so driven as to cause the sprinkler line to move slowly along the field to be irrigated in a direction parallel to the direction of main line 33. Normally closing the upper end of each riser 34 is a novel form of water outlet valve indicated generally at 35. A conveyance in the form of a tractor, indicated generally by reference numeral 36, having tired wheels 37 and driven by suitable means to be described moves in the direction of the arrow along the length of the water main line. The tractor is guided by guide line 38 which is shown as an electrical conduit buried in the ground with an electrostatic pickup device 24 carried by tractor 36 but any suitable type of known guidance system can be used. Tractor 36 in the illustrated embodiment is in the form of an additional tower 39 and another truss 40 connected to the sprinkler line so as to move along the main line at the same overall rate of movement as the sprinkler line, there being well-known means for assuring the synchronism of overall movement between the sprinkler line and the tractor.

Tractor 36 carries a structure having components for co-operating sequentially with successive valves 35 of risers 34 so as to maintain a constant water supply to the sprinkler line. Where desired a concrete pad 31 having a level top surface is installed in the ground at the base of each riser pipe 34, the distance between the top level surface of the pad and the outlet valve being uniformly the same for all risers 34.

In the preferred embodiment of the present invention, the structure just referred to comprises three water carrying arms or conduits 41, 42 and 43 which are all three connected for water flow at their inner or water outlet ends to water inlets 44, 44, 44 of water receiving chamber or manifold indicated generally by the reference numeral 45. In turn, a water outlet orifice 46 of water receiving manifold 45 is connected to a structurally rigid water flow pipe or conduit 47 and the upper portion of rigid water flow pipe 47 is in water flow connection through a swivel pipe or conduit, indicated generally at 49, with the water inlet end of a swivelly or pivotally segmented, rigid conduit 50 connected to the inlet 51 of the water sprinkler line 25. Water receiving chamber or manifold 45 can also be termed a water receiving conduit junction since it serves the purpose of a junction between water carrying conduits 41, 42 and 43 and rigid water flow pipe 47.

Conduit 50 is shown made up of a segmented, rigid pipe with swivel connections, the pipe sections 72, 73 being connected together and to the sprinkler line 25 by swivel joints 74, 75 and at the water inlet end to swivel conduit 49 by swivel joint elbow 76. Conduit 50 can be a flexible hose suitably supported.

At their outer ends, elongated water carrying conduits or arms 41, 42 and 43 have coupling devices indicated generally by the reference numerals 52, 53, 54, respectively, which are designed to successively couple with successive riser valves 35 in the direction of tractor and sprinkler line movement. Each water carrying arm 41, 42 and 43 also has at its outer end a wheeled support structure indicated generally at 56, 57, 58, respectively, and a riser pipe locator 59, 60 and 61, respectively. Each water carrying arm is resiliently supported by a cable arrangement comprising a cable 62 passing around a pulley 64, the pulley being connected to a hydraulic cylinder 65. Cables 67, spring tensioned by springs 68, extend between adjacent water carrying arms to position the arms relative to one another in the horizontal plane. Each water carrying arm support structure indludes a wheel 69 for successively contacting pads 31 as the associated arm coupling device comes into contiguity with the risers 34.

Certain functional components of tractor 36 are indicated in only phantom form in casing 78 since the operating elements of these components are well known in the art and per se form no part of the present invention. In respect to these, reference numeral 80 designates an internal combustion engine which acts as the prime mover for an electric generator 81 which supplies the overall power for the entire apparatus, including the motors 29 of the sprinkler line and the motors 82 of truss 39. Box 83 represents a collection of electronic components for control of the various automatic functions of the system in a manner well known in the art.

It will be apparent that in the embodiments described in the specification and shown in the drawings, water receiving manifold 45 and associated structure are suspended from above on the tractor 36 which comprises additional truss 40 in this case similar to trusses 26, supported at the outer end by additional tower 39, similar to towers 27. Truss 40 crosses the water main line and is of sufficient height to support the water bearing arms above the risers and of sufficient span between towers so as not to interfere with rotation of the water bearing arms.

In each of Figures 1, 2 and 3, consecutively, the tractor 36 is shown as having progressed down the field being irrigated so the water carrying arms are shown in successively advanced positions toward the observer.

In the embodiment shown in Figures 1 to 9, the truss portion 40 of the tractor 36 comprises an open work truss which can incorporate as a component a pipe 102, containing inlet 51, connected at one end 104 to the inlet pipe 106 of field sprinkler system 25. This connection can be through the intermediacy of a flexible coupling 108 carried by the tower 27 which in conventional construction would be the first tower of a plurality of aligned mobile towers supporting the sprinkler line across the field to be irrigated. Coupling 108 can be any conventional structure such as those used on the successive towers of a sprinkler line which permit sufficient flexibility along the sprinkler line so as to accommodate changes in the level of the ground and the necessary dressing or alignment of the sprinkler line as it moves down a field. The necessary instrumentation for maintaining alignment of a sprinkler line has been developed and prefected and is no part of the present invention. However, the tractor 36 of the present invention does act as a moving "anchor" at the main line from which point in one or both directions alignment of the sprinkler line is maintained. The other end of truss 40 is supported by tower-like structure 39 which is similar to truss 27 but includes provision of a platform 110 for mounting casing 78, motor-generator set 80, 81 and electronic instrumentation cabinet 82. It will be understood that tractor 26

need not necessarily be similar in construction to the combined trusses 26 and associated towers 27 of a sprinkler line; any form of tractor apparatus capable of carrying necessary power equipment and having structure of sufficient height to support the rotating water manifold 45 and associated water carrying arms 41, 42, 43 in connectable relation to risers 34 being all that is necessary.

It will be understood from the description thus far that water receiving manifold 45 is connected on the water inlet side to water carrying arms 41, 42, 43 and on the water outlet side to rigid pipe 47 and thence to pivotal or swivel conduit 49, the latter being mounted on a rolling carriage 112, all constituting an integrated structure for bringing coupling members 52, 53 and 54 into consecutive water flow connection with risers 34 through the medium of the special valves 35 in risers 34 and co-operating valve openers associated with the coupling members.

Water receiving manifold 45 is rotatably suspended from rolling carriage 112, this carriage being mounted on four identical rollers 113 which ride transversely of the path of movement of the tractor in a trackway 114 carried by truss 100.

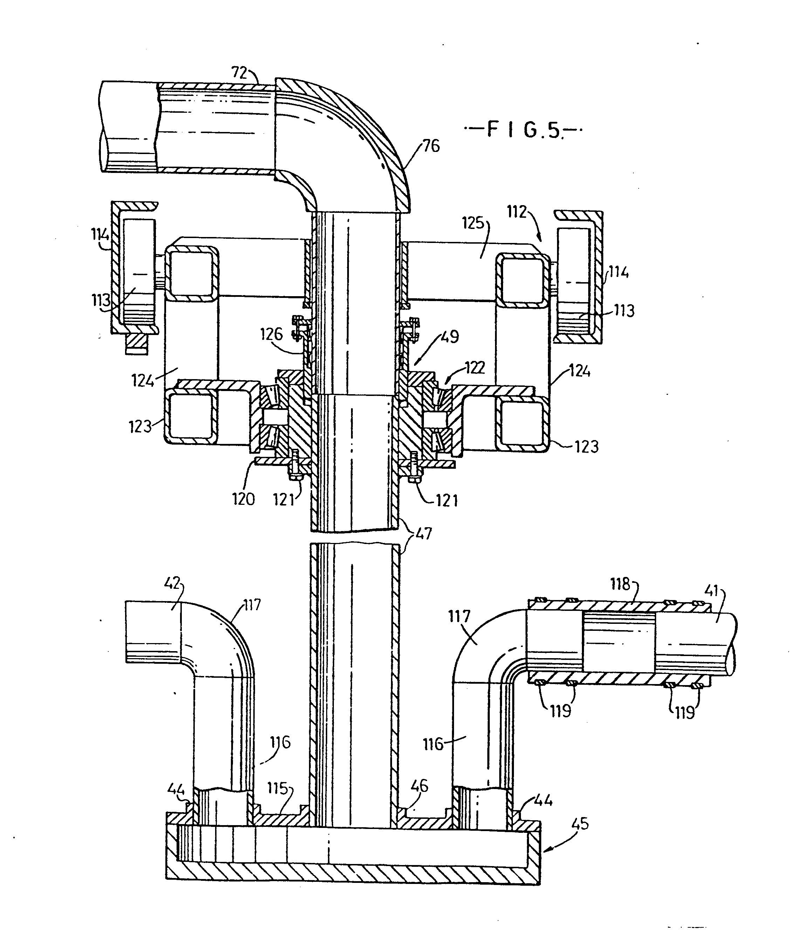

The construction of the water receiving manifold 45, the connection of water receiving manifold 45 to each of the water carrying arms 41, 42, 43, the connection of water receiving manifold 45 with rigid pipe 47 and connection of rigid pipe 47 with swivel conduit 49 are illustrated in Figure 8. Only one water carrying arm connection is illustrated, the others being identical. At the water receiving manifold, water flow structural pipe 47 is rigidly mounted in outlet 46 of the casing 115 of the manifold. Each water carrying arm has an outlet end connected to the manifold through a short pipe section 116, an elbow 117 and a flexible connection made up of a short section of heavy rubber hose 118. The rubber hose section connects the water carrying arm to the manifold with some degree of flexibility. Each end of the section of flexible hose 118 telescopically receives the end section of elbow 117 and the end section of the water carrying arm involved, arm 41 being specifically illustrated in Figure 8. High tensile steel bands 119 are tightened in known manner around the portions of the hose section telescopically receiving elbow 117 and the end portion of arm 41. As already described, cables 62 and hydraulic cylinders 65 support the water carrying arms vertically and spring tensioned cables 67 hold the water carrying arms in horizontally spaced relationship to each other but in each case with hose section 118 permitting slight flexing of the arm in any direction.

The entire manifold and water carrying arms structure is carried on structural pipe 47 which in turn is suspended from rolling carriage 112 through the medium of a swivel conduit 49. The swivel conduit 49 is illustrated in Figure 8 as comprising a flange 120 rigidly mounted as by welding on structural pipe 47, flange 120 being suspended by lug bolts 121 from the rotatable components of a roller bearing structure 122. The stationary components of the roller bearing structure are supported by a framework 123 suspended by structural members 124 from rolling carriage 112. The water receiving elbow of pivotally segmented conduit 50 is received by a pivot keeper 125 rigidly carried by the rolling carriage 112. The upper end of structural pipe 47 is rigidly connected to one component of a packing gland 126, the packing gland sealing the swivel joint between conduits 47 and 76 against water leakage. By this construction, the water receiving manifold and all associated structure are supported for 360° rotation, or less where desired.

In the disclosed embodiment a rigid strut 115 connects each wheel 69 with its associated water carrying arm so that when wheel 69 is in contact with a pad 31, rigid strut 115 and wheel 69 can, as described below, exactly position the associated coupling member 52, 53 or 54 at the right height for connection with the valve 35 of the succeeding riser. Each of the water carrying arms 41, 42 and 43, when its coupling member 52, 53 or 54, respectively, is not contiguous to or connected to a riser, is preferably maintained at a height above the ground greater than the heights of the risers by means of hydraulic cylinders 65 and cables 62, thereby suspending the associated wheels 69 out of contact with the ground. As a coupling member approaches a riser the associated hydraulic cylinder 65 is activated to start lowering the associated water carrying arm so as to bring wheel 69 into contact with the concrete pad 38 at the riser. This will initiate the operation of a mechanism to deactivate the associated hydraulic cylinder 65 to position the associated coupling member at the right height for coupling with the riser valve. This action can be accomplished utilizing the mechanism illustrated in Figure 9. In this mechanism, the wheel mounting fork 116 for wheel 69 is pivotally connected at 117 to the lower end of strut 115. A compression spring 118 maintains fork 116 in the position shown in this figure when wheel 69 is carrying a predetermined fraction of the weight of the water carrying arm. When wheel 69 is carrying less than this fractional weight or is suspended above the ground, fork 116 moves downwardly and microswitch 119 is actuated. During movement of the water carrying arm between risers this switch circuit is blocked but as the coupling member approaches the pad of a riser and the associated cylinder 65 starts lowering the arm, this switch circuit is unblocked and actuation of microswitch 119 gives an electrical signal which assures continuation of this arm lowering operation. When wheel 69 contacts the ground or preferably concrete pad 38, fork 116 moves upwardly or in a clockwise direction around pivot 117 to thereby deactivate microswitch 119 and actuate microswitch 120. Actuation of microswitch 120 will reverse the action of hydraulic cylinder 65 to take weight of wheel 69 until compression spring 118 positions fork 116 in a position where neither microswitch is actuated, thereby deactivating cylinder 65 and stopping movement of the coupling member in a position at the proper height for coupling with the riser valve. Thus it will be seen that even some slight canting or departure from the horizontal of water manifold 45 due to differences in ground level over which tractor 36 is travelling is fully accommodated by the mechanism just described. It is important that each moving water carrying arm not connected or approaching a riser be maintained at a sufficient elevation above the ground by the associated hydraulic cylinders 65 and associated cables 62 so that a wheel 69 does not strike the ground with sufficient force to damage the microswitches 118,120.

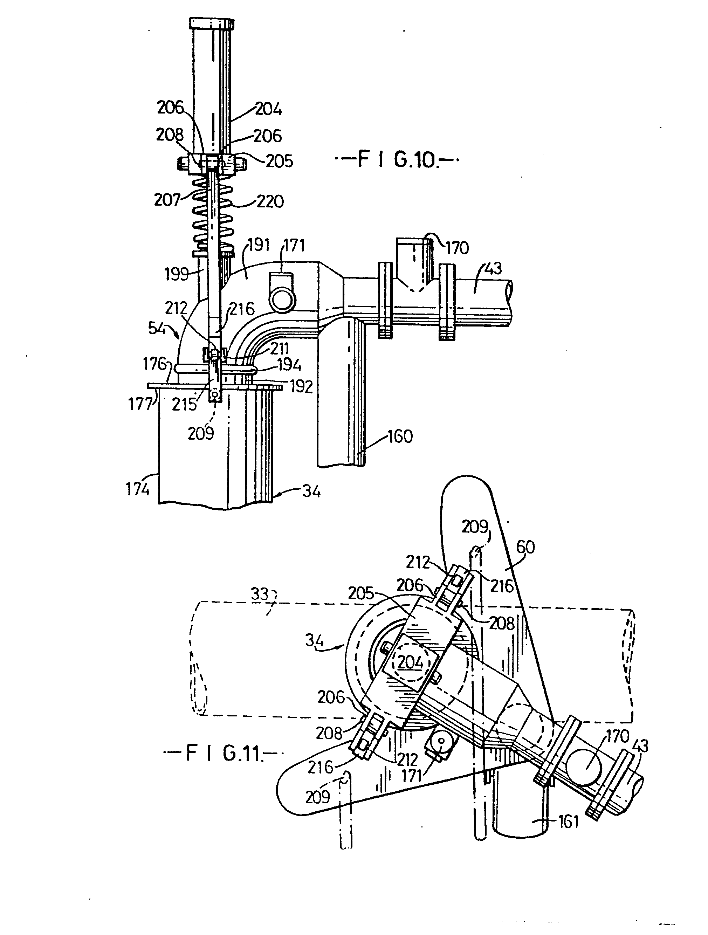

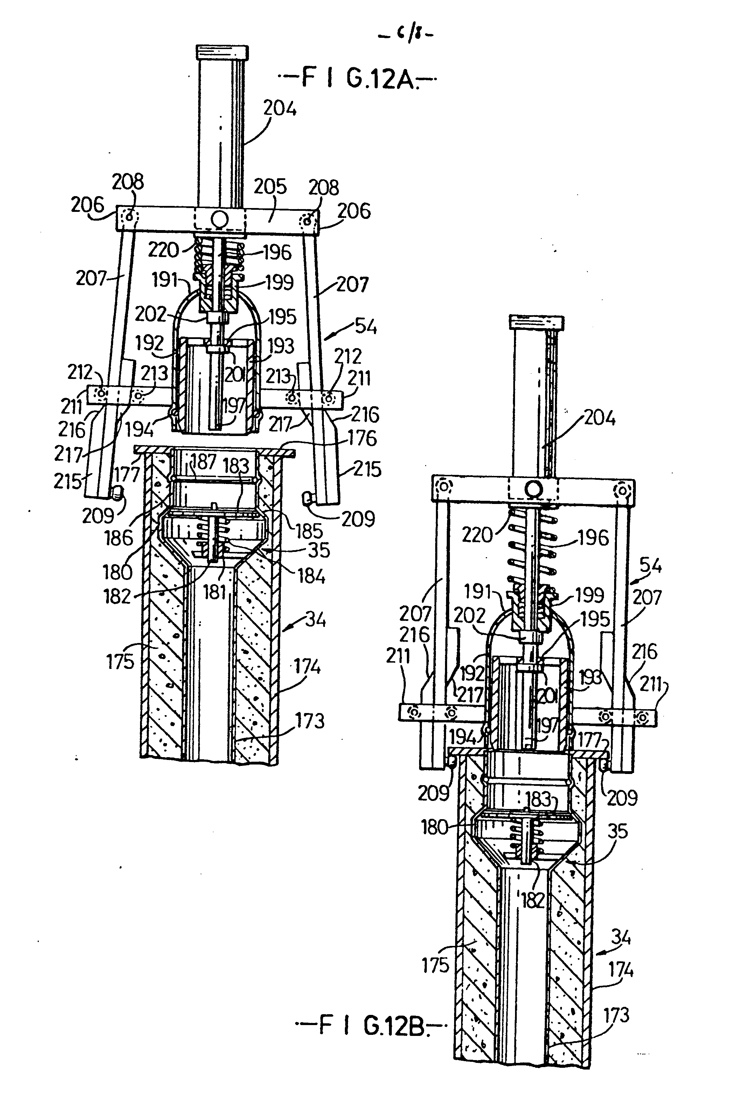

Referring now to Figures 10 to 12, the details of the structure at the end of each water carrying arm including the coupling members 52, 53, 54 and the special outlet valves 35 on risers 34 will be described in detail. In Figures 10 and 11 reference numeral 170 indicates an electric solenoid operated water flow control valve for opening and closing water bearing arm 43, this valve being closed at all times that the water bearing arm is not in water flow relation to an associated outlet valve 35. Reference numeral 171 indicates a solenoid operated bleeder valve the function of which will be explained below.

Considering the Figure 2 showing which is based on the assumption that coupling member 53 has made connection with an outlet valve 35 and coupling member 54 is moving toward coupling connection with an outlet valve 35, Figures 10, 11 and 12 will be described in reference to coupling member 54 as it enters into contiguity with the associated outlet valve 35. Again, however, all three water carrying arms and associated coupling apparatuses are the same and the description of one will suffice for all of them in respect to their sequential connection and disconnection from the outlet valves 35.

Figures 10, 11 and 12 show that the actual riser pipe 34 in each case incorporates a pipe 173 which is protected against impact by a casing 174 filled with concrete 175. The concrete pad 31 also aids in protecting the riser structure. At its upper end riser pipe 173 carries the water outlet valve 35, which valve structure is centered in casing 174 by a reinforcing plate 176 attached to the upper end of casing 174 with a horizontal flange 177 extending around its entire periphery and projecting outwardly of the casing.

Water outlet valve 35 further comprises an enlarged housing 180 enveloping the valve structure proper, the latter consisting of a supporting spider 181 which slideably receives a valve stem 182 carrying the valve closure disc 183, spring pressed by coil spring 184 into seating engagement with valve seat 185. A cylindrical portion 186 of the valve housing 180 extends upwardly into sealing engagement with plate 175. A groove and an internally positioned O-ring indicated at 187 are located at an intermediate point in the height of the cylindrical portion 186.

The coupling member 54 has enlarged housing 191 which includes a cylindrical downwardly extending portion 192 housing a reciprocating telescopingly received cylindrical water conducting member 193, cylindrical portion 192 having a groove and an internally positioned O-ring 194 at an intermediate point in the height of cylindrical portion 192, the O-ring sealing the space between cylindrical portion 192 and cylindrical water conducting member 193 while permitting reciprocating movement of water conducting member 193. A spider 195 carried by the uppermost portion of the water conducting member 193 slideably receives a rod-like valve actuating member 197 while permitting water to pass through housing 191 to valve 170 and water carrying arm 43. Housing 191 has projecting through its wall a packing gland 199 which permits valve actuating member 197 to extend out of the casing while permitting water sealed reciprocating movement thereof through the housing wall. A collar 201 fixedly secured to valve operating member 197 supports cylindrical water conducting member 193 with cylindrical water conducting member 193 being slideable on valve actuating rod 197. A second collar 202 is fixedly secured on valve actuating rod 197 above spider 195 of water conducting member 193. The uppermost portion of valve actuating rod 197 is integral with the lower end of a piston rod 196 which enters into and is joined to a piston in a hydraulic cylinder 204. A bracket 205 is fixedly secured to the lower end of cylinder 204, bracket 205 having ears 206, 206 at its outer ends for pivotally supporting a pair of depending arms 207, 207 on pins 208, 208. At their lowermost ends depending arms 207 carry inwardly projecting rollers 209, 209 designed to engage under flange 177 and rotate in respect thereto with the underside of flange 177 acting as a circular track or bearing surface. On the depending cylindrical portion 192 of housing 191 a bracket is fixedly secured having outwardly extending bifurcated arms 211, 211 forming slots through which

depending arms 207 slideably pass.  At the outer end
portions of such slots are pins 212, 212 and on the
innermost portion of such slots are two additional pins
213, 213.   Pins 212 and 213 co-operate with camming
surfaces on opposite sides of a pair of identical
camming members 215, 215, one set of camming surfaces
being indicated at 216,216 and the other set of
camming surfaces being indicated at 217, 217.

Surrounding valve piston rod 196 where it enters
cylinder 204 and disposed between the lowermost end
of cylinder 204 and the upper surface of packing gland
199 is a strong coil spring 220 which can be held in
its compressed state when the piston rod end 196 of
valve actuating rod 197 is in fully retracted position
in cylinder 204.

Figures 10 and 11 show the coupling member,
indicated generally at 54, in coupled position with
the casing 174 of a riser 34.   Figures 12A, 12B,
12C and 12D demonstrate how the components of coupling
member 54 make the connection with riser casing 174,
seal off the joint between the coupling member and the
outlet valve 35, and open valve 35.

As will be seen in Figure 12A, as the coupling
member approaches riser 34 and is guided into vertical
alignment with outlet valve 35 by locator member 61,
rollers 209 are held in such spaced relation from each
other that they will clear flange 177.   Additionally,
the distance between rollers 209 and the lowermost
edge of cylindrical coupling element 192 is appreciable
and allows tolerance, if needed, relative to the height
of coupling member 54 above outlet valve while still
properly positioning the parts for connection.   It will
also be clear that coupling member 54 can approach
riser 34 at a considerable height so long as locator
member 61 can make contact with casing 174 of the riser.

Starting with the operating parts of coupling member 54 and outlet valve 35 as shown in Figure 12A, the hydraulic fluid on the lower side of the piston in cylinder 204 has its pressure reduced permitting coil spring 220 to push cylinder 204 and framework 205, 207 upward relative to arms 211. Upon such movement, cam surfaces 216, 216 move rollers 209 inwardly and as cylinder 204 and the depending framework continue to move upwardly, rollers 209 engage flange 177. Coil spring 220 is strong enough, acting through the depending framework and rollers 209 under flange 177 to hold the coupling member and outlet valve 35 in registry ready for water-tight coupling and subsequent valve opening actions, as shown in Figure 11B.

Considering next the transition from Figure 12B to Figure 12C, with the coupling member in the position shown in Figure 12B, the hydraulic fluid in cylinder 204 is increased in pressure on the upper side of the piston to extend piston rod 196 downwardly to cause collar 202 to engage spider 195 and thereby move cylindrical water conduit member 193 downwardly into the cylindrical portion 186 of outlet valve housing 180, the shamfered lower edge of cylindrical water conduit 193 assuring registry and a telescoping relationship of that part within the cylindrical portion 186 of outlet valve housing 180.

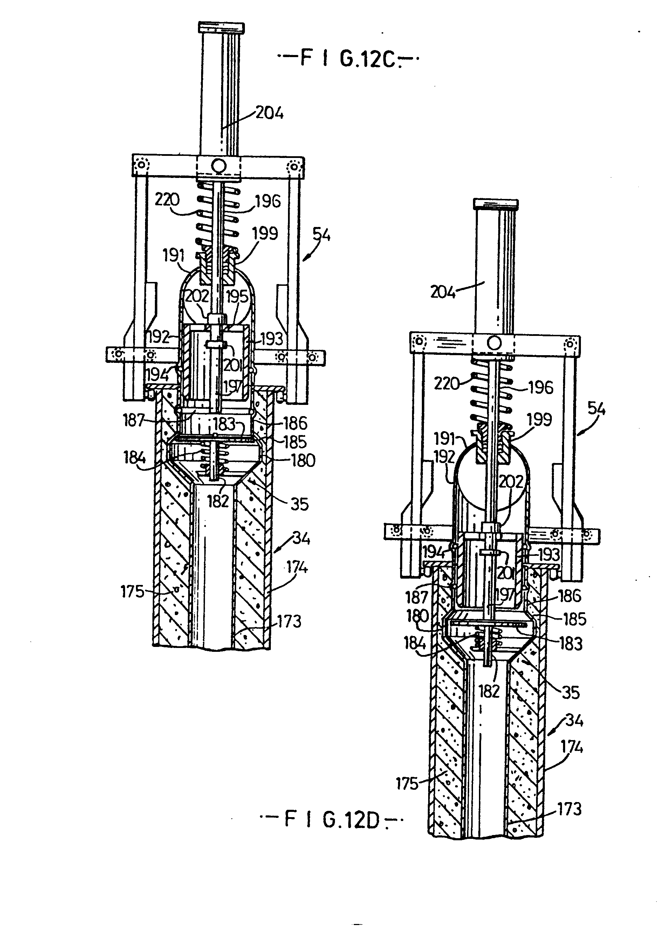

As shown in Figure 12D, continued movement of piston rod 196 and valve actuating rod 197 carries cylindrical water conduit member 193 farther down and into sealing engagement with O-ring 187 thereby completing the sealed water flow passage between the outlet valve housing 180 and the water carrying arm, and water can flow through this passage as the completion of the movement of valve operating rod 197 pushes valve plate 183 open against the pressure of spring 184.

Since a short interval of time elapses from the time locator member 61 brings coupling member 54 into contiguity with an outlet valve 35 until the coupling member is in position to open the outlet valve 183, a time-delay mechanism, not shown, is included to delay valve opening operation of the valve operating rod 197.

A water pressure sensitive control (not shown) in housing 191 in association with electronic controls back at the conveyance closes bleeder valve 171 and opens solenoid water flow control valve 170.

It will be noted that rollers 209 and associated structure permit water carrying arm 43 to rotate around the riser 34 while maintaining water-tight connection of coupling member 54 with outlet valve 35.

Turning now to coupling member 53 which is connected in water flow relation to a water outlet valve 35 (Figure 2), at the time locator member 61 of arm 43 lines up coupling member 54 with the outlet valve 35 as just described, the delay signal already mentioned delays the disconnect sequence of actions in coupling member 53 until valve 183 as just described has opened to place water carrying arm 43 in water flow relation with the main line. This delay is advisable so that at least one water carrying arm is in water flow connection with the main line 33. The conveyance 36 can pause while these operations take place and then continue its onward movement.

It is to be understood that there can be an appreciable time lag in making the connection and valve opening at an outlet valve (for example a minute) because the entire sprinkling line can pause and the lack of any forward movement of the line for long enough to make and break the connections at the risers will have no objectionable effect. Thus these connection and disconnection actions are not necessarily simultaneous but only approximately so.

Before breaking the coupling member 53 connection, a control at 83 in conjunction with the initiation of disconnection of the outlet valve 35 and coupling member 53 acts to close the solenoid corresponding to that shown at 170 and open the bleeder valve corresponding to that shown at 171, in Figures 10 and 11. The bleeding action is advisable to gradually relieve the water pressure differential across the valve elements.

All the coupling members and outlet valve members being identical, the showings in Figure 12D, 12C, 12B and 12A in that order illustrate the sequence of actions in breaking the connection between coupling member 53 and the associated outlet valve 35. Considering Figure 12A it will be noted that increasing the pressure on the lower side of the piston in hydraulic cylinder 204 will compress spring 220, at the same time pulling up arms 207 and causing cam surfaces 217, 217 to spread arms 207 and disengage rollers 209 from the undersurface of flange 177, permitting coupling 53 to move away from the outlet valve 35.

As tractor 36 moves down the field, wheels 28 and 37 will at times encounter different ground levels which will cause truss 40 to depart from a horizontal position longitudinally. Additionally, although to a smaller degree, forward wheels 28 and 37 may encounter different ground levels than trailing wheels 28 and 37 causing truss 40 to depart from the horizontal plane transversely. Since any of these movements would affect the stability of carriage 112 and in turn water manifold 45 and water carrying arms 41, 42 and 43, provision is made for maintaining trace 114 as close as practicable to the horizontal. This is accomplished by supporting one end of the track through the medium of a universal joint 235 and the other end by a pair of hydraulic cylinders 236 and 237 mounted on truss 40 by brackets 238. Pipe elbows 75, 75 are designed to be flexible enough to accommodate any slight departures of water flow pipe 47 from the vertical due to slight canting movement of trackway 114 not entirely compensated for by cylinders 236 and 237. By means of conventional instrumentation, not illustrated, cylinders 236 and 237 maintain track 114 in or as near as practicable to a horizontal plane thereby maintaining water manifold 45 and water carrying arms 41, 42 and 43 as near as practicable in horizontal planes.

In describing the embodiment of Figures 1 to 12 it was stated that movement of tractor 36 along the length of the main line caused rotary movement of water carrying arms 41, 42 and 43 by virtue of reaction between the risers 34 and the arm coupled to a riser. However, in view of the appreciable weights involved in respect to the water carrying arms and in view of the stresses applied to the water manifold 45 by the reaction between the coupled water carrying arm and riser, it may be desirable in this embodiment to utilize power means for counteracting any desired part of the water carrying arm reaction on the riser. Since the reaction between the water carrying arm and the riser and the amount of movement of carriage 112 along trackway 114 vary in magnitude depending upon the position of the water carrying arm coupled to the riser, it is desirable to have a slip-clutch type drive arrangement. Thus, considering Figure 1, with water carrying arm 42 coupled with the associated riser valve 35 and water carrying arm 41 being uncoupled from the associated riser valve 35, a large component of force is exerted on water carrying arm 42 along its length by reaction at the associated riser valve 35 because of the acute angle of the water carrying arm to the direction of movement of tractor 36. Utilizing fluid drive, for example, a desired amount of torque on rigid water flow pipe 47 or push on carriage 112 can be supplied to cause the desired movement of water carrying arm 42 without objectionably stressing the structures involved. A slip-clutch or fluid drive will also permit momentary cessation of rotation of the water carrying arms at those times when two coupling members may be connected to two risers at the same time.

Power actuated means are therefore provided for the disclosed embodiments and such power assist means can be associated with the rotation of the water carrying arms or with the reciprocating movement of the water manifold toward or away from the direction of the water main or with both.

Referring especially to Figure 8, the means for taking stress of the riser due to resistance of the water bearing arms to rotation is shown as comprising a gear 240 fixedly mounted on rigid water flow pipe 47 which carries water manifold 45 and the water carrying arms. The teeth of gear 240 engage a pinion gear 241 mounted on a shaft 242 of a conventional combination electric motor and fluid drive device 244. The combination electric motor and fluid drive device is designed to supply sufficient torque to the rotating water manifold 45 and the involved water bearing arm so that no objectionable stress is placed on the coupled riser, the coupled water bearing arm or the water manifold supporting structure due to rotative forces.

Relative to reciprocating motion of carriage 112, it will be observed from Figure 1 that as the tractor 36 moves in the direction of the arrow along the main line the force applied to water bearing arm 42 by riser 34 has a large vector component tending to bend rigid water flow pipe 47 and possibly rigid water flow pipe 42 and to urge carriage 230 against its side thrust bearings 246. To obviate this stress on the structures involved, a rack 248 is provided on one track 114 extending lengthwise of the trackway. A pinion gear 249 carried by a shaft 250 is operatively meshed with rack 248, the shaft being turned by a conventional combination electric motor and fluid drive device 251. Combination electric motor-fluid drive device 251 places a driving torque on pinion gear 249 and rack 248 sufficient to remove objectionable stresses from water carrying arm 42, water manifold 45, rigid water flow pipe 47 and carriage 112 by moving the carriage along trackway 114 with a force that balances a desired portion of the force which would otherwise be applied by riser 34 along the length of water carrying arm 42. When carriage 112 reaches the end of track 233, an electric switch (not shown) can be utilized to reverse the direction of rotation of the combination electric motor-fluid drive device, and the force applied to carriage 112 by pinion gear 249 and rack 248 will then move carriage 112 in the direction of the main line in a manner to remove objectionable stresses applied through water carrying arm 42 to water manifold 45 and thence to rigid flow pipe 47 and carriage 112 by tension applied to water carrying arm 42 at riser 34. The moving force applied to carriage 112 can be designed to supply a desired variable force so as to just balance the force exerted on the carriage by the water carrying arm. This also applies to gear 240 to which can be applied enough torque to balance resistance of the water bearing arms to rotation. In any event, it will be obvious that momentary cessation of movement of the water bearing arms will not adversely affect the system just described because of the fluid drive characteristics of devices 240, 241 and 242.

Where desired more sophisticated controls can be utilized in relation to combination electric motor and fluid drive devices 244 and 251 by incorporating stress indicating devices at the coupling member of each water bearing arm, operative when the coupling member is

-22-

coupled to a riser valve 35 which will control the speed of the electric motor or the torque delivery characteristics of the fluid drive component or components being used to vary the torque outputs so as to exactly balance the stress which would otherwise be applied along the length of the coupled water bearing arm involved.

From the description of the preferred embodiments it will be apparent that an important aspect of the present apparatus invention is the provision of a water conduit means rotatably connecting the water outlet of the water manifold with the inlet end of the water sprinkler line. This rotatable connection could be in the form of a flexible hose where the amount of rotation is not through 360° and can be in the form of a swivel water flow conduit or the like where there is rotation through 360°.

It has been stated earlier in this specification that the coupling between one water bearing arm and the associated riser is maintained until the coupling between a second water bearing arm and associated riser has been completed. In this respect, it is often advisable to stop the tractor long enough so that two water carrying arms are connected to adjacent risers momentarily thereby assuring maintenance of water pressure in the sprinkler line.

It is conventional for the plurality of sprinkler line components to be aligned by individual components starting and stopping independently. In this way the sprinkler line and the tractor move together at the same overall rate of movement and not usually in synchronism.

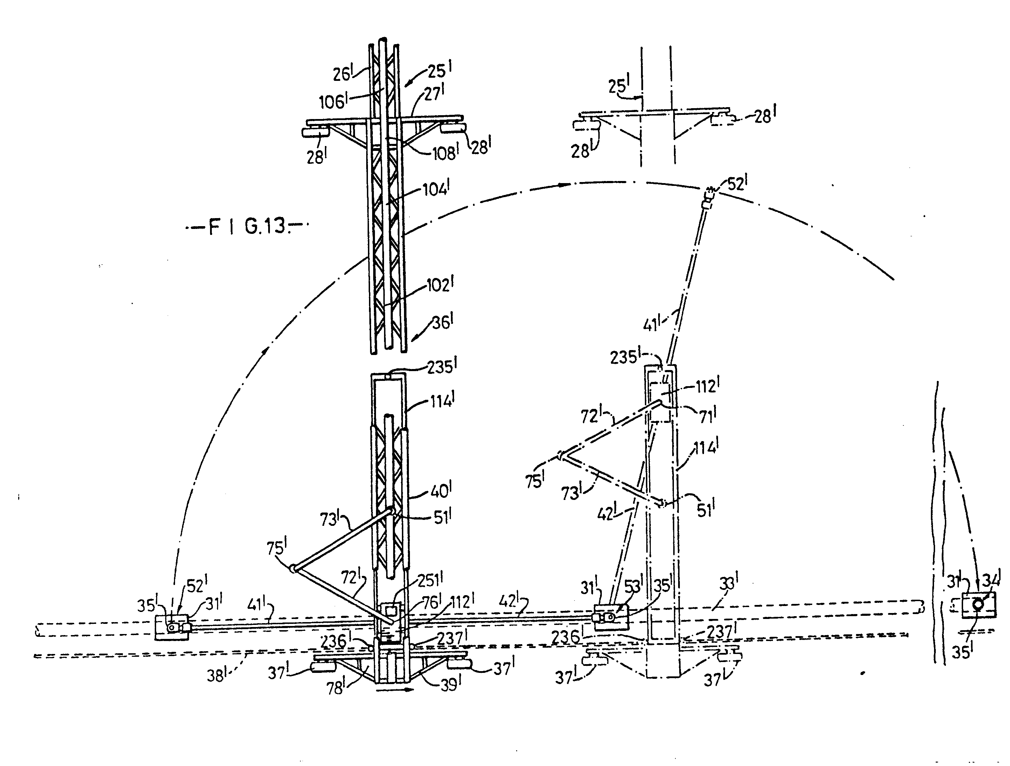

Figure 13, taken with the preceding figures, illustrates a modification of the present invention which is similar in all respects to the embodiment just described except that instead of three water carrying arms at 120° angular spacing, two water carrying arms at 180° angular spacing are utilized. This modification is made possible by any power assist means for
rotating the water carrying arms and/or any power
assist means for acting on the movable carriage but
preferably as illustrated in Figure 8 of the previously
described embodiment. In Figure 13 the same reference
numerals are used to indicate the same or equivalent
components as those used in reference to the embodiment
already described but with the reference numerals in
Figure 13 being primed so as to, insofar as practicable,
eliminate repetition of descriptive material in the
specification.

In this modification, the water carrying arms are
designated by reference numerals 41' and 42' since
there are only two of them. The two water carrying
arms of this modification connect to a water receiving
chamber or manifold 45' but with two water admission
points 180° apart instead of the three at 120° apart as
in the preceding embodiment. In order to simplify
the showing in Figure 13, the short flexible hose
connections like those designated by reference numeral
118 in the previous embodiment do not appear and the
supporting cable and hydraulic cylinders designated by
the reference numerals 62 and 65 respectively in the
preceding embodiment have been omitted although both
of these components and their functions are present.
Since arms 41' and 42' in the modification of Figure
13 are at 180° angular displacement in respect to each
other, instead of cables 67 any suitable structural
means is provided for resiliently constraining water
carrying arms 41' and 42' to their 180° relationship.

It will be apparent that in the modification of
Figure 13, the power assist means illustrated in Figure
8 for rotating the water carrying arms 41', 42',
indicated in Figure 8 by reference numerals 240, 241 and 242 and the power assist means shown in Figure 8 for moving the mobile carriage 112', indicated in Figure 8 by reference numerals 248, 249, 250 and 251, either one or both, constitute an important part of the combination. As in the previous embodiment, a fluid drive type of power assist is preferable.

Assuming coupling member 53' has just come into connecting position with the associated valve 35', the same sequence of functions will take place as described in the preceding embodiment for bringing water carrying arm 43 and coupling member 54 into water flow relationship with main line 33. Coupling member 52' will then go through the sequence of operations already described in the previous embodiment by which it is disconnected from the associated valve 35'. During these two operations tractor or conveyance 36' will be momentarily stationary. Simultaneously with tractor 36' starting to move forward to the right in Figure 13, one or both power assist means will be actuated to start arms 41' and 42' rotating and start carriage 112 moving outwardly away from the main line. Thus coupling member 52' will start to move at right angles to the main line 33' away from the associated valve 35' and the "head on" alignment of arms 41' and 42' at coupling member 53' with the associated valve 35' will be converted into a pivotal relation at coupling member 53'. As tractor 26' progresses down the main line to the right, water carrying arms 41' and 42' will assume the positions shown in dotted lines in Figure 13 with coupling member 52' approaching the next riser 34' and next outlet valve 35'. At the point where mobile carriage 112' reaches the far end of track 114 relative to the main line, a switch reverses the direction of mobile carriage power assist, when that power assist is being used, alone or in conjunction with the rotating power assist means, for the water carrying arms. At the time coupling member 52' reaches the next valve 35', tractor 36' will again pause in its movement along the main line and the power assist means mechanism or mechanisms being used can be made inoperative and the same sequence of functions carried out as described in respect to the tractor being in full line position. On completion of the coupling connection between coupling member 52' and the extreme right hand valve 35' in Figure 13 and the disconnection of coupling means 53', the power assist means can again be made operative to start the water carrying arms rotating or the mobile carriage 112' moving or both, simultaneously with the tractor 36' starting into motion. Thus the modification of Figure 13 will function in a manner equivalent to that of the embodiment previously described.

Throughout the specification, references have been made to operation of the various parts and co-ordination of components of the apparatus to accomplish the functional desiderata. All the electronic and programming equipment needed for carrying out these functions are well known in the art and therefore the specification and drawings have not been complicated by their inclusion.

Although three arms are shown fixed at 120° angular spacing and two arms at 180° angular spacing, two independently movable arms could be used with gearing or a power driven fluid drive acting between them so that as the 120° rotation of one arm around an outlet valve takes place a 240° rotation of the other arm will occur to thereby bring the other arm into registry with the next riser. However, due to the considerable weight of the water in each arm, the three arms at 120° arrangement and the two arms at 180° arrangement are the preferred embodiments, the arms in such case forming a balanced structure.

The conveyance is shown on one side of the sprinkler line; however, the conveyance, i.e. the apparatus carrying the water receiving manifold and water carrying arms could be located at an intermediate point on the sprinkler line so long as the water main line is accessible to the water carrying arms.

Where in this specification and appended claims the verb "rotate" and its noun, adjective and adverb forms are used, they do not necessarily require complete or $360^{\circ}$ rotation. Where in the claims the terminology "not substantially less" is used in respect to the length of each water carrying arm, the fact that the water receiving chamber or conduit junction pertinent dimension is included in the length of the water carrying arm is to be understood.

Where desired the downward force exerted by each water carrying arm can be utilized to open and close the connection between the coupling member and the associated water outlet valve means of the water main line instead of the means illustrated in Figures 12A, 12B, 12C and 12D.

It will be obvious from the description of the embodiments illustrated that a single water carrying arm can be employed in lieu of the plurality of arms with a rotation of the arm around a water outlet valve of less than $360^{\circ}$.

-1-
## CLAIMS

1. Apparatus for use in connection with a land irrigating system, comprising a moving water sprinkler means, having water inlet means at one point, extending laterally to and moving along the length dimension of a stationary water supply means of the irrigation system having a plurality of water outlet valve means at equally spaced points along the length thereof, and means for connecting water outlet valve means of the stationary water supply means with the water inlet means of the sprinkler means, comprising conveyance means for moving along the length dimension of the stationary water supply means at the same overall rate of movement as the moving water sprinkler means, the apparatus being characterised by: rotatable water receiving conduit junction means (45) carried by the conveyance means (36,36') having water outlet means (46) and water inlet means (44), an elongated water conduit means (41) (41'), the length of the elongated water conduit means being not substantially less than one half the distance between adjacent water outlet valve means (35, 35') but substantially less than the distance between adjacent water outlet valve means (35, 35'), water outlet means (117) associated with the end portion of the elongated water conduit means (41, 41') nearest the water conduit junction means, means (116) associated with the water outlet means (117) of the elongated water conduit means for connecting the water outlet means of the elongated water conduit means to conduct water to a water inlet means of the water receiving conduit junction means (45), water flow control valve means (170) for opening and closing the elongated water conduit means, connecting means (52) (52') associated with the other end portion of the elongated conduit means for successive water flow connection and disconnection with the water outlet valve means (35, 35') on the stationary water supply means, means (207, 208, 209, 211, 212) associated with the connecting means for rotatable connecting the connecting means in water flow connection relation with a water outlet valve means (35, 35') for rotation of the elongated conduit means around the water outlet valve means, means (47, 49) supporting the water receiving conduit junction means and the elongated water conduit means for rotational movement around a water outlet valve means, and water conduit means (47, 49, 76) for rotatably connecting the water outlet means of the water receiving conduit junction means and the inlet means (51) of the water sprinkler means (25, 25') for water flow from the water receiving conduit junction means to the water sprinkler means water inlet means (51).

2. Apparatus as claimed in claim 1 characterised in that there are a plurality of elongated water conduit means (41, 42, 43) (41', 42') radially disposed relative to the water receiving conduit junction means.

3. Apparatus as claimed in claim 1 or 2 characterised in that movable support means (112) are carried by the conveyance means for supporting the water receiving conduit junction means for movement relative to the conveyance means toward and away from the water supply means between a position of the water receiving conduit junction means closest to the water supply means when the conveyance means is far from any one of the plurality of water outlet valve means and a position of the water receiving conduit junction means farthest from the water supply means when the conveyance means is close to any one of the plurality of water outlet valve means.

4. Apparatus as claimed in claim 3 characterised in that means (114) are provided for supporting the movable support means (112) for straight line movement toward and away from the water supply means (33, 33') and in a direction normal to the direction of the water supply means.

5. Apparatus as claimed in claims 3 or 4 characterised in that power actuated means (248, 249, 250) carried by the conveyance means for at least assisting in the movement of the movable support means.

6. Apparatus as claimed in any of the preceding claims characterised in that the means supporting the water receiving conduit junction means (45) and the elongated water conduit means (41, 41') include water conduit swivel means which support the same for rotational movement through $360^{\circ}$ relative to the sprinkler means water inlet conduit.

7. Apparatus as claimed in any of the preceding claims characterised in that locating means (59,60,61) are provided associated with the end portion of the elongated water conduit means adjacent said connecting means (52, 52') for positioning a connecting means contiguous to a water outlet valve means.

8. Apparatus as claimed in any of the preceding claims characterised in that coordinating means (83) are provided for successively closing a water outlet valve means (35, 35') and the water flow control valve means (170) of the associated elongated water conduit means and unconnecting the associated connecting means subsequently to another connecting means being connected to a second water valve means and the second water valve means being opened.

9. Apparatus as claimed in any of the preceding claims characterised in that means (47, 49, 112) are provided associated with the conveyance (36, 36') whereby movement of the conveyance along the length dimension of the water supply means results in rotation of the water receiving conduit junction means (45) and the plurality of elongated water conduit means (41, 41') to thereby bring succeeding connecting means (52, 52') into successive connection relationship with successive water outlet valve means (35, 35') along the length of the water supply means.

10. Apparatus as claimed in any of the preceding claims characterised in that power actuated means (240, 241, 242, 244) are provided carried by the conveyance for at least assisting in rotational movement of the water receiving junction conduit means and elongated water conduit means.

11. Apparatus as claimed in any of claims 1 to 10 characterised in that the conveyance (36, 36') is an extension of the moving water sprinkler means support means, and includes means for supporting the water receiving conduit junction means (45) and associated structure from above by the conveyance.

12. Apparatus as claimed in any of the preceding claims characterised in that valve opening and closing means are provided associated with each connecting means for opening and closing water outlet valve means.

13. Apparatus as claimed in any of the preceding claims characterised in that there are three elongated water conduit means disposed in 120° relation to each other.

14. Apparatus as claimed in any of claims 1 to 12 characterised in that there are two elongated water conduit means disposed in 180° relation to each other.

15. A method for use in connection with land irrigation, in which method a moving sprinkler means having a water inlet means at one point moves along the length of a stationary water supply means having a plurality of water outlet valve means at spaced intervals along the length thereof, and water outlet valve means of the stationary water supply means are connected with water inlet means of the sprinkler means to obtain a water supply to the sprinkler means, the method being characterised by moving a conveyance means (36, 36') along the length dimension of the stationary water supply means (33, 33'), the conveyance means carrying a water receiving conduit junction means (45) having water outlet means (46) rotatably connected to the water inlet means (51) of the sprinkler means, the water receiving conduit junction means also having a plurality of water inlet means (44), and elongated water conduit means (41, 41'), each elonated water conduit means having water outlet means (117) at one portion connected to the water inlet means of the water receiving conduit junction means and each elongated water conduit means having a connecting means (52, 52') at the other end portion for successive water flow connection and disconnection with the water outlet valve means (35, 35') on the stationary water supply means, rotating the water receiving conduit junction means (45) and the elongated water conduit means (41, 41') to bring the connecting means (52, 52') of a first elongated conduit means into contiguity with a first water outlet valve means (35, 35') of the stationary water supply means while maintaining the connecting means of a second elongated water conduit means connected for water flow to the water outlet valve means of the stationary water supply means next adjacent to the first water outlet valve means in the direction opposite to the direction of movement of the conveyance means along the length of the stationary water supply means, rotatably connecting the connecting means (52, 52') of the first elongated conduit means and the first water outlet valve means (35, 35') for water flow and subsequently disconnecting the connecting means of the second elongated conduit means from the second water outlet valve means to stop water flow through the second elongated water conduit, moving a connecting means (52, 52') other than the first connecting means of an elongated water conduit means other than the first elongated water conduit means into contiguity with a third water outlet valve means next adjacent to the first water outlet valve means in the direction of movement of the conveyance means along the length of the stationary water supply means, and rotatably connecting the connecting means other than the first connecting means of the elongated conduit means other than the first elongated conduit means and the third water outlet valve means for water flow and subsequently disconnecting the coupling means of the first elongated connecting means from the first water outlet valve to stop water flow through the first elongated water conduit means.

16. The method as claimed in claim 15 characterised in that there are three elongated water conduit means, and the water receiving conduit junction means (45) and the plurality of elongated water conduit means are rotated through $120^{\circ}$ to bring the connecting means (52, 52') of each elongated water conduit into contiguity with successive water outlet valve means.

17. The method as claimed in claim 16 characterised in that there are two elongated water conduit means, and the water receiving conduit junction means (45) and the plurality of elongated water conduit means are rotated through $180^{\circ}$ to bring the connecting means (52, 52') of each elongated water conduit into contiguity with successive water outlet valve means.

—F I G.1—

0007150

—FIG.2.—

—FIG.8.—

—FIG.9.—

0007150

-3/8-

—F I G.3.—

—F I G.4.—

—F I G.6.—

—F I G.7.—

-FIG.5.-

−F I G.10.−

−F I G.11.−

_ 6/8 _

-F I G.12A-

-F I G.12B-

—F I G.12C.—

—F I G.12D.—

-FIG.13-

0007150

European Patent
Office

**EUROPEAN SEARCH REPORT**

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| | US − A − 3 679 135 (GROSCH)<br><br>* the entire document *<br><br>———— | 1,2,<br>6,12,<br>15 | A 01 G 25/09<br>F 16 L 27/08 |
| D | US − A − 3 463 175 (ROGERS)<br><br>* column 2, line 64 to column 3, line 44; figures 2,3 *<br><br>———————— | 8 | |

TECHNICAL FIELDS
SEARCHED (Int.Cl.²)

A 01 G

CATEGORY OF
CITED DOCUMENTS

X: particularly relevant
A: technological background
O: non-written disclosure
P: intermediate document
T: theory or principle underlying
 the invention
E: conflicting application
D: document cited in the
 application
L: citation for other reasons

&: member of the same patent
 family,
 corresponding document

The present search report has been drawn up for all claims

| Place of search | Date of completion of the search | Examiner |
|---|---|---|
| The Hague | 22-06-1979 | HERIJGERS |